Europäisches Patentamt

(19) European Patent Office

Office européen des brevets

(11) EP 0 517 220 B1

(12) **EUROPEAN PATENT SPECIFICATION**

(45) Date of publication and mention
of the grant of the patent:
**12.03.1997 Bulletin 1997/11**

(51) Int. Cl.6: **B25J 9/18**

(21) Application number: **92109465.2**

(22) Date of filing: **04.06.1992**

(54) **Method and apparatus for controlling robot**

Verfahren und Vorrichtung zur Robotersteuerung

Procédé et appareil de contrôle pour les robots

(84) Designated Contracting States:
**DE IT**

(30) Priority: **05.06.1991 JP 159869/91**

(43) Date of publication of application:
**09.12.1992 Bulletin 1992/50**

(73) Proprietors:
• **HITACHI, LTD.**
**Chiyoda-ku, Tokyo 101 (JP)**
• **HITACHI KEIYO ENGINEERING CO., LTD.**
**Narashino-shi Chiba-ken (JP)**

(72) Inventors:
• **Shiina, Tsukasa**
**Narashino-shi (JP)**

• **Shibuya, Hajime**
**Funabashi-shi (JP)**
• **Washizu, Sumio**
**Ichikawa-shi (JP)**
• **Takabuchi, Yuji**
**Hanamigwa-ku, Chiba-shi (JP)**
• **Watanabe, Hiroshi**
**Hodogaya-ku, Yokohama-shi (JP)**

(74) Representative: **Beetz & Partner**
**Patentanwälte**
**Steinsdorfstrasse 10**
**80538 München (DE)**

(56) References cited:
EP-A- 0 055 915      EP-A- 0 132 616
EP-A- 0 254 884      EP-A- 0 271 691
EP-A- 0 398 150      EP-A- 0 400 154

## Description

The present invention relates to a method and an apparatus for controlling a robot which detects a relative position of the robot and a workpiece using a sensor and determines a target position of the robot based on the detected relative position. Such a robot control is suited for a robot of a teaching/play-back type.

Usually, an industry robot device such as a welding robot is designed to perform a series of operations sequentially on the basis of prepared data by way of e.g. teaching. In this case, the posture of a work (object to be worked) may be controlled with an error due to different setting positions and shapes of the work between the time of teaching and the time of play-back, or its deformation.

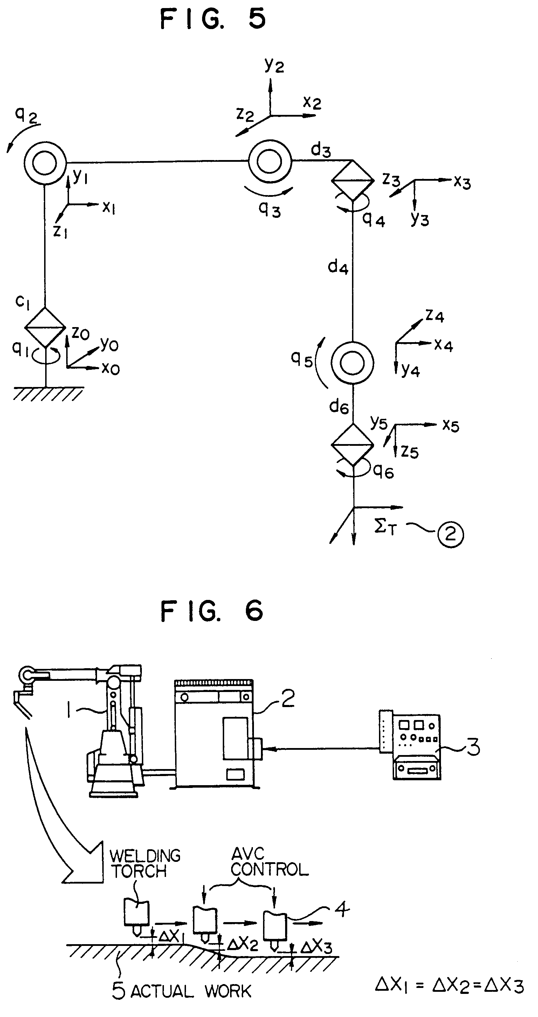

To obviate such an inconvenience, an industry robot system as shown in Fig. 6 has been used which detects relative positions of a robot mechanism (manipulator) and a work using a sensor (AVC sensor) and corrects the position of the robot.

The system of Fig. 6 is directed to control of a TIG (tungsten-inert gas) welding robot, and more specifically a robot equipped with an AVC sensor. In this control, the fact that the welding voltage (arc voltage) in an electric arc welding corresponds to an arc length is used. The voltage is introduced into a control apparatus. The distance between the tip of a welding torch and a work is varied so that the voltage is constant, thereby providing a constant arc length. In Fig. 6, reference numeral 1 denotes a robot mechanism unit; 2 denotes a robot control apparatus; 3 denotes a TIG welding machine equipped with an AVC sensor; 4 denote welding torches; and 5 denotes a work. The AVC control acts on the welding torches 4 so that the distance $\Delta x$ between the tip of the welding torches and the work is constant, thereby correctively controlling the robot mechanism (hereinafter, simply referred to as a robot).

Actually, the correction amount Vs calculated from a detected arc voltage is used to calculate the correction amount of a torch direction vector (which is an approach vector including a torch moving direction when the distance between the torch tip and the work is varied) on a robot coordinate (which is given at the fingertips of the robot). The correction amount thus calculated is added to an interpolation directing value to perform the AVC sensor control so that the voltage detected by the AVC sensor is reflected on the torch direction.

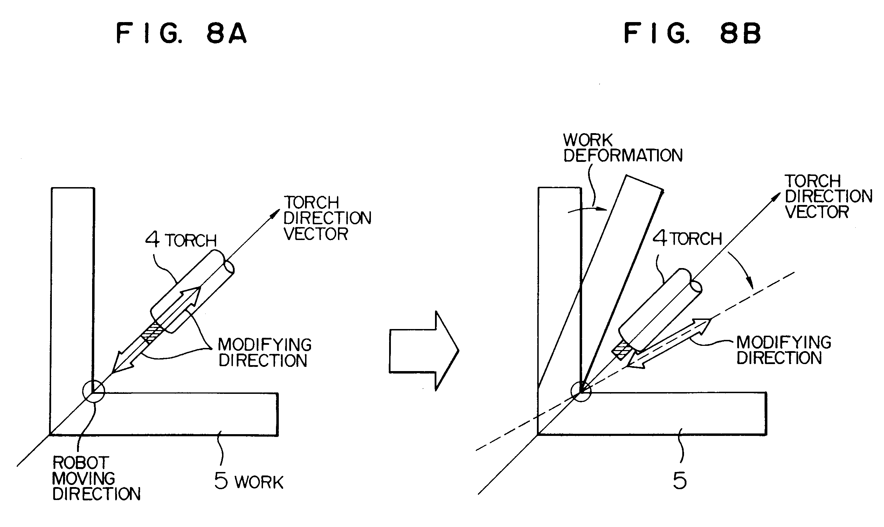

Now when the TIG welding is done while the AVC sensor is operated for the work 5, as shown in Fig. 8(a), the position of the torch 4 is corrected in such a manner that it is moved along the torch direction vector by a correction amount calculated corresponding to the distortion of the work 5.

However, when the shape of the work 5 has been greatly deformed as shown in Fig. 8(b), the moving direction for correction must be taken in a modifying direction denoted by broken line which is different from the prescribed torch direction vector.

The conventional AVC sensor, which is commercially available from YASUKAWA DENKI CO. LTD. as a product name of "YASNAC-ERC" is therefore adapted to be capable of selecting the modifying direction from three directions of a tool coordinate direction, an optional direction and a moving direction.

However, in this case also, the modifying direction is decided using as a reference the coordinate given to the fingertips of the robot, and the direction vector resulting from the summation of values on the rectangular axes of the coordinate is taken as a correction direction vector; this vector is an approach vector or a tool direction vector indicative of the vector of the direction in which the tool moves.

Changing the modifying direction, which means a change in the values on the rectangular coordinate axes at the robot fingertips, is not intuitively known by an operator. It is therefore necessary to stop the operation once to change the values on the rectangular coordinate thereby to modify the approach vector; thereafter the passing point of the robot must be taught again. This is because the teaching point is determined by the approach vector. As described above, in the prior art, no care is taken of changing the modifying direction in real time while the robot operates.

However, the direction of changing the direction vector to be corrected is determined by the state of an actual work during play-back. It is therefore difficult to determine the changing direction if it is not carried out while the state of an actual welding arc (a direction of generating the arc, a welding state, etc.) is actually seen. The above prior art cannot deal with it sufficiently.

The EP-A-0 400 154 shows furthermore a robot operation method which enables a correction of a teach point taught in advance by a manual operation using a teaching pendant.

The EP-A-0 132 616 defining the closest prior art shows a system for automatically calibrating the space coordinates of a robot gripper in six degrees of freedom and is therefore directed to correcting errors occurring in the robot itself.

The above prior art, however, does not show any means for allowing correction direction information to be input while the robot operates in accordance with the shape or posture of the work.

An object of the present invention is to realize a method and an apparatus for controlling a robot which can change a sensor correction direction in real time while a robot operates, and can always deal with the distortion of a work to perform an accurate correction operation.

This object is solved according to the features of the independent claims. The dependent claims show advantageous embodiments of the invention.

In accordance with the present invention, the reference direction for a correction direction is defined, a man-machine interface is provided for directing the correction direction to be changed, and the correction direction suitable to control of a robot is acquired on the basis of the defined reference direction and the moving direction of the robot using the correction direction information given by the man-machine interface. In a preferred embodiment, an algorithm is provided to calculate the correction amount in a correction direction every predetermined interpolation sampling and add it in robot interpolation. In another preferred embodiment, a modifying direction storage table is provided for storing the calculated correction direction using as an index the corresponding operation condition such as a welding condition.

In accordance with the present invention, since the correction direction is defined by an angle of the correction direction of a robot formed with the reference direction, an operator can easily know the correction direction. So he can easily direct the modifying direction so that he can direct the modifying direction while the robot operates through a man-machine interface using an input from the operating box for a robot.

The algorism for calculating the correction amount every predetermined interpolation sampling and adding it in robot interpolation acts so that the correction processing for a robot is executed for the most short time. The correction can be surely made in real time. Further, the modifying direction storage table enables the modifying direction due to the operation condition of the robot to be read. So the correction based on a previous learning result can be acquired without inputting modifying direction information.

Fig. 1 is a block diagram of a control apparatus in one embodiment of the present invention;
Fig. 2 is a schematic block diagram of a system arrangement in one embodiment of the present invention;
Fig. 3 is a view for explaining an operation box in one embodiment of the present invention;
Fig. 4 is a view for explaining the definition of a sensor modifying direction vector in one embodiment;
Fig. 5 is a view showing the robot mechanism to which one embodiment of the present invention is applied;
Fig. 6 is a view showing the arrangement of one example of a robot system equipped with an AVC sensor according to the present invention;
Fig. 7 is a view for explaining the operation theory of a robot system equipped with an AVC sensor according to the present invention; and
Figs. 8A and 8B are views for explaining the relationship between a work and a torch in a welding robot.

The robot controlling method according to the present invention will be explained in detail by way of an embodiment as illustrated.

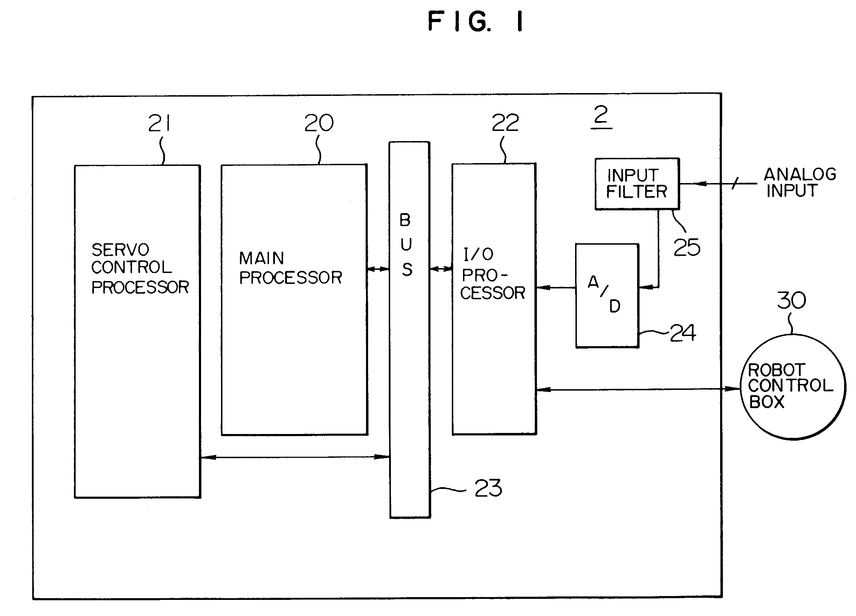

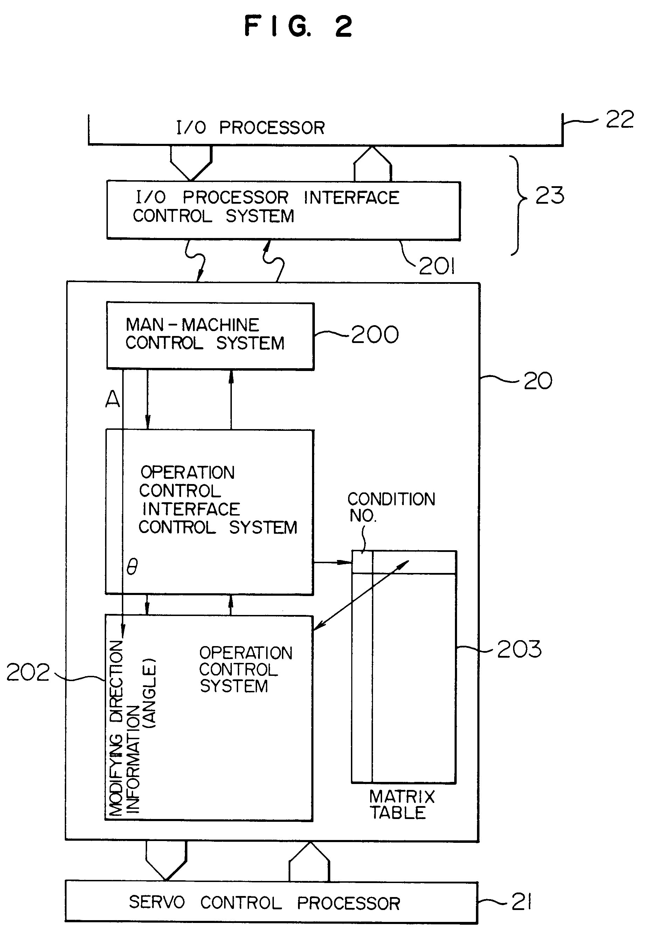

An embodiment according to the present invention has a hardware construction as shown in Fig. 1 on which the system as shown in Fig. 2 operates.

The block construction shown in Fig. 1 corresponds to the robot control apparatus 2 in the system shown in Fig. 6. The hardware of Fig. 1 includes a main processor 20, a servo processor 21, an I/O processor 22, a bus 23, an A/D converter 24 and an input filter 25. The robot control apparatus 2 is designed to be able to introduce, through the I/O processor 22, analog inputs from several kinds of sensors attached to a robot and also provide an interface with an operation box 30. The system shown in Fig. 2 illustrates a partial arrangement of the operation program within the main processor 20.

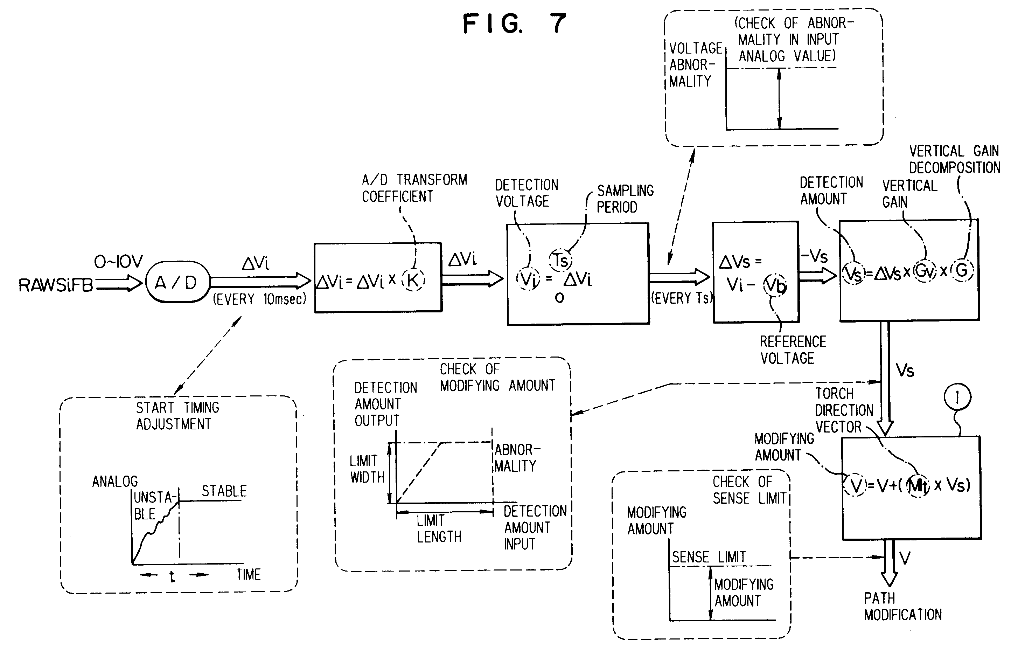

The operation of this embodiment will be explained. The control operation for a robot will proceed along the internal processing flow as shown in Fig. 7.

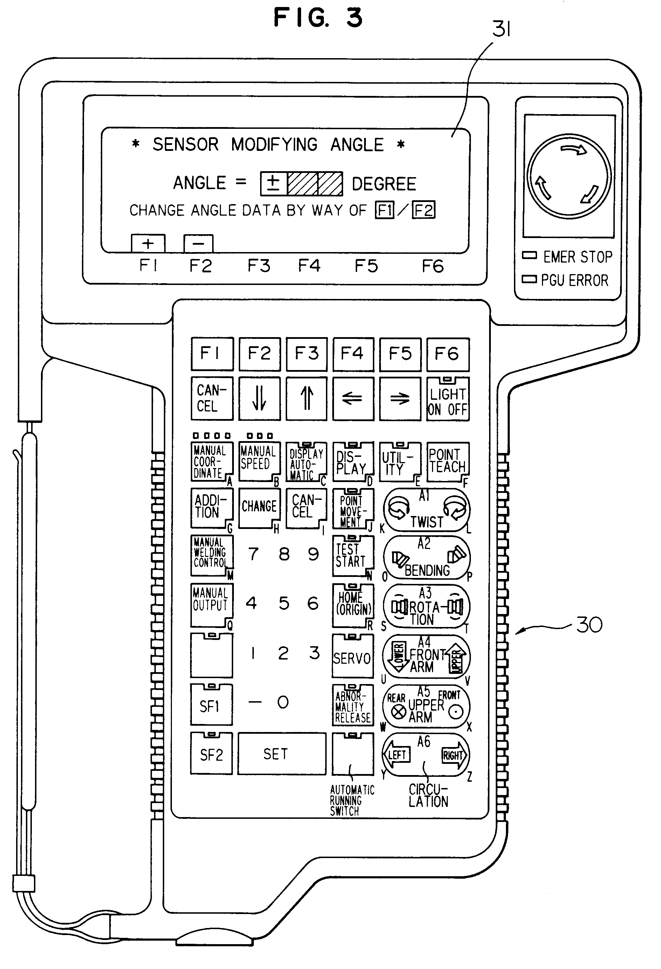

Concurrently with this, the man-machine control system 200 of Fig. 2 makes the display as shown in Fig. 3 on the operation box 30 connected with the I/O processor 22, and urges an operator to input modifying direction information. Incidentally, on the operation box 30 shown in Fig. 3, numeral 31 denotes a display unit serving as a man-machine interface.

In response, when the operator inputs predetermined angle information by operating the operation box 30, the man-machine control system 200 takes in this information through an I/O processor interface control system 201. Thereafter the man-machine control system 200 causes, for confirmation, the information to be displayed on the display unit 31 of the operation box 30, and also transfers the modifying direction information thus obtained and the welding condition now being used by the robot to an operation control system 202 through a path A in Fig. 2.

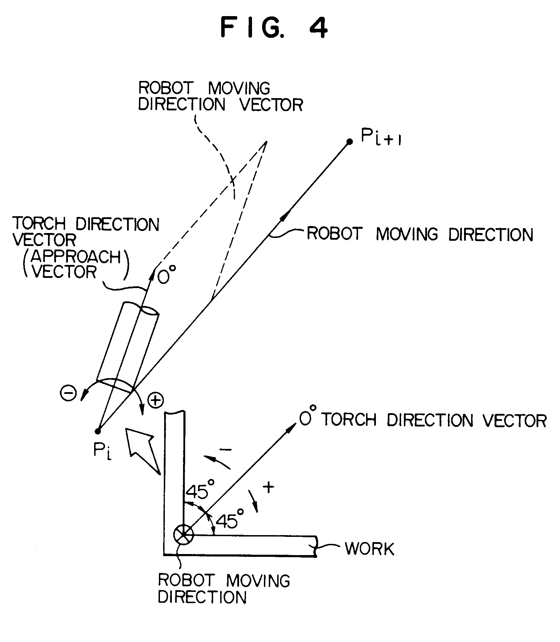

The input data (modifying direction information) and display data in the man-machine information control system 200 are defined as shown in Fig. 4. A robot moving direction vector is defined as the reference direction of a modifying direction. The robot moving direction vector when a work forms a right angle represents a plane formed by the moving direction of the robot torch at issue and a line (which forms 45° with the respective axes of the work) drawn in the middle of the angle of the work; this plane shown by broken line is defined as 0°. Since the modifying direction of the torch is defined by the angle formed by the above plane (reference direction of the modifying direction) and the torch direction vector (approach vector) when the torch moves for correction, the modifying direction information of the torch direction vector is inputted in terms of the above angle.

Next, the operation control system 202 calculates a new matrix on the basis of the following matrix calculation algorism using the angle information (modifying direction angle) of the modifying direction information acquired. The operation control system 202 sets this matrix on a matrix table 203 with indices of numbers representative of welding conditions (operation conditions).

Now this matrix results in a 3 x 3 matrix as described later, and its third column designates an approach vector. Thus, the approach vector of the calculated matrix is an approach vector rotated by a modifying angle given by the man-machine control system 200 as defined in connection with Fig. 4.

(Matrix calculation algorism)

It is assumed that the mechanism of a robot (manipulator) has six axes as shown in Fig. 5. Then, a general equation of normal transform when a torch (tool) is attached to the tip of a robot provides a vector with the posture and position of the torch tip in accordance with a Link coordinate as expressed by Equation (1)

$$A_R^T = [\prod_{i=1}^{6} A_{i-1}^i] \cdot A_F^T \qquad (1)$$

$$= A_0^1 \cdot A_1^2 \cdot A_2^3 \cdot A_3^4 \cdot A_4^5 \cdot A_5^6 \cdot A_6^7$$

If this vector is separated into a position component and a posture component, the final position of the torch is given by Equation (2) and the final posture is given by Equation (3).

$$^0E_T = {}^0E_6 + d_6 \cdot {}^0F_6 \cdot {}^6F_T + {}^0F_6 \cdot {}^6E_T \qquad (2)$$

$$= {}^0E_6 + {}^0F_6 (d_6 \cdot {}^6F_T + {}^6F_T)$$

where $^0E_T$ : a final position.

$$^0F_T = {}^0F_6 \cdot {}^6F_T \qquad (3)$$

where $^0F_T$ : a final posture.

OFT denotes a transform matrix from a robot base to a tool tip; 0F6 denotes a transform matrix from the base to a sixth axis (flange); and 6FT denotes a transform matrix including the approach vector from the sixth axis to the tool tip (Mt at ① in Fig. 7).

Character 6FT having a pre-superscript 6 and a post-subscript T on the right side of Equation (3) designates a coordinate (② in Fig. 5) of the tool attached to the tip of the robot, and takes the matrix form expressed by Equation (4)

$$^6F_T = \begin{pmatrix} n_x & O_x & A_x \\ n_y & O_y & A_y \\ n_z & O_z & A_z \end{pmatrix} \qquad \dots \dots (4)$$

In the matrix of Equation (4), the third column composed of Ax, Ay and Az is called the approach vector as described above. This approach vector is located in the same direction as the torch direction.

In order to rotate the approach vector in the matrix represented by Equation (4) in accordance with the definition illustrated in Fig. 4, it is transformed according to Equation (6) using the angle $\theta$ given by the man-machine control system 200 and the robot moving direction vector given by Equation (5) thereby to provide a new approach vector.

$$C = \frac{P_{i+1} - P_i}{|P_{i+1} - P_i|} = \begin{pmatrix} e_x \\ e_y \\ e_z \end{pmatrix} \qquad (5)$$

where C : a robot moving direction vector

$$B = C \cdot A + (1-C) \begin{pmatrix} e_x^2 & e_x e_y & e_x e_z \\ e_x e_y & e_y^2 & e_y e_z \\ e_x e_z & e_y e_z & e_z^2 \end{pmatrix} A - S \cdot$$

$$\begin{pmatrix} O & e_z & -e_y \\ -e_z & O & e_x \\ e_y & -e_x & O \end{pmatrix} A \qquad \cdots \cdots (6)$$

where    A : a previous approach vector
           B : a new approach vector
           $C = \cos\theta$ , $S = \sin\theta$

Thus, the new approach vector is acquired on the basis of the angle information as modifying information. Robot control is advanced using this approach vector as a torch direction vector in the correction processing unit ① along the internal processing flow in the control device of Fig. 7. The angle information provides a correction amount on the approach vector so that the path is corrected to interpolate the robot. Thus, the correction direction can be changed in real time while the robot operates.

Thus, in accordance with the embodiment, if a necessary angle is inputted from the operation box 30 while a robot operates, the correction direction of the robot can be easily changed in real time. An operator can easily deal with the modifying direction explained in connection with Fig. 8 while actually seeing the state of a welding arc, thereby providing a correct changing direction.

On the other hand, in this embodiment, if changing the correction direction is not instructed, the operation control system 202 reads, from the matrix table 203, the matrix with the index of the condition number now being used, and advances the robot control using this matrix as a torch direction vector in the correction processing unit (1).

Therefore, in accordance with the present invention, if a predetermined correction direction is previously given in accordance with an operation condition, it is used as a learning data. The corresponding operation condition number can automatically provide an optimum modifying direction. Thus, a work with a complicate shape and plural different works can be dealt with easily.

Accordingly, in accordance with the present invention, since the sensor correction direction can be easily changed while a robot operates, a suitable correction direction can be always given in accordance with the state of a work. So the present invention can be applied to e.g. a welding operation to provide a good working result easily at all time.

## Claims

1.   Method for controlling a robot, comprising the steps of:

    -    detecting a relative position of the robot (1) and a workpiece (5) by a sensor,
    -    determining a target position of the robot (1) based on the detected relative position, and
    -    controlling the robot (1) to operate in a predetermined direction based on the determined target position,

    **characterized in that**

    -    a robot moving direction vector is defined as a reference direction,
    -    a modifying direction information relative to the reference direction is input,
    -    a robot direction vector is determined based on the modifying direction information,
        and

- the robot (1) is controlled to operate based on the determined robot direction vector and the determined target position.

2. Method according to claim 1,
characterized in that
the modifying direction information is input during an operation of the robot (1).

3. Method according to claim 1 or 2,
characterized in that
the modifying direction information is input via the robot operation unit (30) in terms of an angle formed with the reference direction.

4. Method according to at least one of claims 1 to 3,
characterized in that
the determination of the robot direction vector is sequentially executed for each interpolation processing of the robot (1).

5. Method according to at least one of claims 1 to 4,
characterized in that
the determined robot direction vector is stored with an index relating to the corresponding operation condition of the robot (1).

6. Apparatus for controlling a robot (1), including

- a sensor for detecting a relative position of the robot (1) and a workpiece (5),
- a robot control unit (2) having an operation control system (202) for determining a target position of the robot (1) based on the detected relative position, and for controlling the robot (1) to operate in a predetermined direction based on the determined target position,

**characterized in that**
the robot control unit (2)

- defines a robot moving direction vector as a reference direction,
- allows the input of modifying direction information relative to the reference direction via a man-machine control system (200),
- determines a robot direction vector based on the modifying direction information,
and
- controls the robot (1) to operate based on the determined robot direction vector and the determined target position.

7. Apparatus according to claim 6,
characterized in that
the modifying direction information is input during an operation of the robot (1).

8. Apparatus according to claims 6 or 7,
characterized in that
the modifying direction information is input via the robot operation unit (30) in terms of an angle formed with the reference direction.

9. Apparatus according to at least one of claims 6 to 8,
characterized in that
the determination of the robot direction vector is sequentially executed for each interpolation processing of the robot (1).

10. Apparatus according to at least one of claims 6 to 9,
characterized in that
the determined robot direction vector is stored with an index relating to the corresponding operation condition of the robot (1).

# EP 0 517 220 B1

**Patentansprüche**

1.  Verfahren zum Steuern eines Roboters, mit den Schritten:

    -   Erfassen einer Relativposition des Roboters (1) und eines Werkstücks (5) durch einen Sensor,
    -   Bestimmen einer Sollposition des Roboters (1) basierend auf der erfaßten Relativposition und
    -   Steuern des Roboters (1) für eine Betätigung in eine vorbestimmte Richtung basierend auf der bestimmten Sollposition,

    **dadurch gekennzeichnet,** daß

    -   ein Roboterbewegungsrichtungsvektor als Referenzrichtung definiert wird,
    -   eine Modifikationsrichtungsinformation relativ zu der Referenzrichtung eingegeben wird,
    -   ein Roboterrichtungsvektor bestimmt wird basierend auf der Modifikationsrichtungsinformation und
    -   der Roboter (1) derart gesteuert wird, daß er basierend auf dem bestimmten Roboterrichtungsvektor und der bestimmten Sollposition betätigt wird.

2.  Verfahren nach Anspruch 1,
    dadurch gekennzeichnet, daß
    die Modifikationsrichtungsinformation während der Betätigung des Roboters (1) eingegeben wird.

3.  Verfahren nach Anspruch 1 oder 2,
    dadurch gekennzeichnet, daß
    die Modifikationsrichtungsinformation über die Roboterbetätigungseinheit (30) durch einen Winkel eingegeben wird, der mit der Referenzrichtung gebildet wird.

4.  Verfahren nach zumindest einem der Ansprüche 1 bis 3,
    dadurch gekennzeichnet, daß
    die Bestimmung des Roboterrichtungsvektors sequentiell für jede Interpolationsverarbeitung des Roboters (1) durchgeführt wird.

5.  Verfahren nach zumindest einem der Ansprüche 1 bis 4,
    dadurch gekennzeichnet, daß
    der bestimmte Roboterrichtungsvektor mit einem Index bezüglich der entsprechenden Betriebsbedingung des Roboters (1) gespeichert wird.

6.  Vorrichtung zum Steuern eines Roboters (1) mit

    -   einem Sensor zum Erfassen einer Relativposition des Roboters (1) und einem Werkstück (5),
    -   einer Robotersteuereinheit (2) mit einem Betriebssteuersystem (202) zum Bestimmen einer Sollposition des Roboters (1) basierend auf der erfaßten Relativposition und zum Steuern des Roboters (1) für einen Betrieb in eine vorbestimmte Richtung basierend auf der bestimmten Sollposition,

    **dadurch gekennzeichnet,** daß
    die Robotersteuereinheit (2)

    -   einen Roboterbewegungsrichtungsvektor als Referenzrichtung definiert,
    -   die Eingabe von modifizierten Richtungsinformationen relativ zu der Referenzrichtung über ein Maschinensteuersystem (200) erlaubt,
    -   einen Roboterrichtungsvektor basierend auf der modifizierten Richtungsinformation bestimmt und
    -   den Roboter (1) derart steuert, daß er basierend auf dem bestimmten Roboterrichtungsvektor und der bestimmten Sollposition betrieben wird.

7.  Vorrichtung nach Anspruch 6,
    dadurch gekennzeichnet, daß
    die Modifikationsrichtungsinformation während einem Betrieb des Roboters (1) eingegeben wird.

8.  Vorrichtung nach Anspruch 6 oder 7,
    dadurch gekennzeichnet, daß

7

die Modifikationsrichtungsinformation über die Roboterbetriebseinheit (30) durch einen Winkel eingegeben wird, der mit der Referenzrichtung gebildet wird.

9. Vorrichtung nach zumindest einem der Ansprüche 6 bis 8,
   dadurch gekennzeichnet, daß
   die Bestimmung des Roboterrichtungsvektors sequentiell für jede Interpolationsverarbeitung des Roboters (1) durchgeführt wird.

10. Vorrichtung nach zumindest einem der Ansprüche 6 bis 9,
    dadurch gekennzeichnet, daß
    der bestimmte Roboterrichtungsvektor mit einem Index bezüglich der entsprechenden Betriebsbedingung des Roboters (1) gespeichert wird.

## Revendications

1. Procédé pour commander un robot, comprenant les étapes consistant à :

   - détecter une position relative du robot (1) et d'une pièce à usiner (5) au moyen d'un capteur,
   - déterminer une position de consigne du robot (1) sur la base de la position relative détectée, et
   - commander le robot (1) pour qu'il fonctionne dans une direction prédéterminée sur la base de la position de consigne déterminée,

   caractérisé en ce que

   - un vecteur de direction de déplacement du robot est défini en tant que direction de référence,
   - une information de modification de direction par rapport à la direction de référence est introduite,
   - un vecteur de direction du robot est déterminé sur la base de l'information de modification de direction, et
   - le robot (1) est commandé de manière à fonctionner sur la base du vecteur déterminé de direction du robot et de la position de consigne déterminée.

2. Procédé selon la revendication 1, caractérisé en ce que
   l'information de modification de direction est introduite pendant une opération exécutée par le robot (1).

3. Procédé selon la revendication 1 ou 2, caractérisé en ce que
   l'information de modification de direction est introduite au moyen de l'unité (30) d'actionnement du robot sous la forme d'un angle par rapport à la direction de référence.

4. Procédé selon l'une au moins des revendications 1 à 3, caractérisé en ce que
   la détermination du vecteur de direction du robot est exécutée séquentiellement pour chaque traitement d'interpolation du robot (1).

5. Procédé selon l'une au moins des revendications 1 à 4, caractérisé en ce que
   le vecteur déterminé de direction du robot est mémorisé avec un indice associé à la condition de fonctionnement correspondante du robot (1).

6. Dispositif pour commander un robot (1), comprenant

   - un capteur pour détecter une position relative du robot (1) et d'une pièce à usiner (5),
   - une unité (2) de commande du robot possédant un système de commande de fonctionnement (202) pour déterminer une position de consigne du robot (1) sur la base de la position relative détectée, et pour commander le robot (1) pour qu'il fonctionne dans une direction prédéterminée sur la base de la position de consigne déterminée,

   caractérisé en ce que l'unité (2) de commande du robot

   - définit un vecteur de direction de déplacement du robot en tant que direction de référence,
   - permet d'introduire une information de modification de direction par rapport à la direction de référence par l'intermédiaire d'un système de commande homme-machine (200),
   - détermine un vecteur de direction du robot sur la base de l'information de modification de direction, et

-   commande le robot (1) pour qu'il fonctionne sur la base du vecteur déterminé de direction du robot et de la position de consigne déterminée.

7.  Dispositif selon la revendication 6, caractérisé en ce que
    l'information de modification de direction est introduite pendant une opération exécutée par le robot (1).

8.  Dispositif selon les revendications 6 ou 7, caractérisé en ce que
    l'information de modification de direction est introduite par l'intermédiaire de l'unité (30) d'actionnement du robot sous la forme d'un angle par rapport à la direction de référence.

9.  Dispositif selon au moins l'une des revendications 6 à 8, caractérisé en ce que
    la détermination du vecteur de direction du robot est exécutée séquentiellement pour chaque traitement d'interpolation du robot (1).

10. Dispositif selon au moins l'une des revendications 6 à 9, caractérisé en ce que
    le vecteur déterminé de direction du robot est mémorisé avec un indice associé à la condition de fonctionnement correspondante du robot (1).

EP 0 517 220 B1

# F I G. 2

I/O PROCESSOR ~22

I/O PROCESSOR INTERFACE CONTROL SYSTEM ~23

201

MAN-MACHINE CONTROL SYSTEM ~200

A

OPERATION CONTROL INTERFACE CONTROL SYSTEM

θ

CONDITION NO.

20

OPERATION CONTROL SYSTEM

MODIFYING DIRECTION INFORMATION (ANGLE)

202

MATRIX TABLE

203

SERVO CONTROL PROCESSOR ~21

# FIG. 3

# F I G. 4

# FIG. 5

# FIG. 6

WELDING TORCH

AVC CONTROL

$\Delta X_1$  $\Delta X_2$  $\Delta X_3$  4

5 ACTUAL WORK

$\Delta X_1 = \Delta X_2 = \Delta X_3$

# FIG. 7

EP 0 517 220 B1

(CHECK OF ABNOR-
MALITY IN INPUT
ANALOG VALUE)

VOLTAGE
ABNOR-
MALITY

VERTICAL GAIN
DECOMPOSITION

A/D TRANSFORM
COEFFICIENT

DETECTION
VOLTAGE

SAMPLING
PERIOD

DETECTION
AMOUNT

VERTICAL
GAIN

$0 \sim 10V$

RAWSiFB $\Rightarrow$ (A/D) $\Rightarrow \Delta Vi$

(EVERY 10msec)

$\Delta Vi = \Delta Vi \times (K)$ $\Rightarrow \Delta Vi$

$(Vi) = \Delta Vi$

$(Ts)$

$0$

(EVERY Ts)

$\Delta Vs = Vi - (Vb)$

$\Rightarrow Vs$

$(Vs) = \Delta Vs \times (Gv) \times (G)$

REFERENCE
VOLTAGE

Vs

START TIMING
ADJUSTMENT

ANALOG

UNSTA-
BLE

STABLE

$\leftarrow t \rightarrow$ TIME

CHECK OF
MODIFYING AMOUNT

DETECTION
AMOUNT
OUTPUT

LIMIT
WIDTH

ABNOR-
MALITY

LIMIT
LENGTH

DETECTION
AMOUNT
INPUT

TORCH
DIRECTION
VECTOR

MODIFYING
AMOUNT

$(V) = V + ((Mt) \times Vs)$

CHECK OF
SENSE LIMIT

MODIFYING
AMOUNT

SENSE LIMIT

MODIFYING
AMOUNT

$V$

PATH
MODIFICATION

# FIG. 8A

# FIG. 8B

EP 0 517 220 B1